Europäisches Patentamt

European Patent Office

Office européen des brevets

(11) Publication number: 0 392 733 A2

# EUROPEAN PATENT APPLICATION

(21) Application number: 90303604.4

(22) Date of filing: 04.04.90

(51) Int. Cl.5: H02H 3/08, H02H 3/02

(30) Priority: 12.04.89 GB 8908237

(43) Date of publication of application:
17.10.90 Bulletin 90/42

(84) Designated Contracting States:
BE DE FR GB IT

(71) Applicant: PLESSEY OVERSEAS LIMITED
Vicarage Lane
Ilford Essex IG1 4AQ(GB)

(72) Inventor: Ireland, Robert Sidney
59 High Street
Bulford Village,Salisbury, Wiltshire(GB)

(74) Representative: Nicholson, Ronald
Intellectual Property Department The
Plessey Company plc 2-60 Vicarage Lane
Ilford Essex IG1 4AQ(GB)

(54) Improvements relating to solid state electric switching arrangements.

(57) A solid state electric switching arrangement for switching and protecting an AC circuit against predetermined levels of overcurrent comprises a pair of switching transistors which are controlled by an output switch drive circuit to be conducting during normal operation of the AC circuit. A current level monitoring circuit is provided for monitoring the peak current levels in the AC circuit during operation thereof and is effective for producing an instantaneous change of state of the output switch drive circuit to render the pair of transistors non-conducting when the monitored peak current level exceeds a predetermined overcurrent level. A zero voltage switch-on circuit conditions the pair of switching transistors prior to switch on of the AC circuit so that the switching transistors are rendered conducting at the instant when the AC supply voltage for the AC circuit is at zero voltage level.

# IMPROVEMENTS RELATING TO SOLID STATE ELECTRIC SWITCHING ARRANGEMENTS

This invention relates to solid state electric switching arrangements for switching and protecting AC circuits and electrical loads connected therein against overcurrents.

The present invention is directed to cost effective solid state electric switching arrangements of relatively simple construction which inter alia provide for zero voltage point switch on of the protected AC circuit thereby avoiding the problem of radio frequency interference whilst providing for extremely rapid random voltage point switch off of the AC circuit when overcurrent conditions occur.

According to the present invention there is provided a solid state electric switching arrangement for switching and protecting an AC circuit against predetermined levels of overcurrent, comprising a pair of switching transistors which are controlled by an output switch drive circuit to be conducting during normal operation of the AC circuit, a current level monitoring circuit for monitoring the peak current levels in the AC circuit during operation thereof and effective for producing an instantaneous change of state of the output switch drive circuit to render the pair of switching transistors non-conducting when the monitored peak current level exceeds a predetermined overcurrent level and a zero voltage switch on circuit which conditions the pair of switching transistors prior to switch on of the AC circuit so that the switching transistors are rendered conducting at the instant when the AC supply voltage for the AC circuit is at zero voltage level.

The switching arrangement may also include a switching status circuit which is preferably electrically isolated from the switching transistors and which detects and provides an indication of the condition of the switching transistors and thus normal or overcurrent condition of the AC circuit.

The control input signal will need to be removed and then re-applied to the switch on/switch off circuit which preferably includes electrically isolating means before the AC circuit can again be brought into operation by the switching transistors being rendered conducting. Thus the switching arrangement remains latched in the off condition until a control input signal is re-applied to the switch on/switch off circuit.

Switching arrangements may be provided with a low voltage DC isolated power supply derived from a DC or AC supply.

The switching transistors are preferably field effect transistors (e.g. MOSFETS) and the electrically isolating means of the status circuit and the switch on/switch off circuit may comprise optical coupling arrangements between photo-diode and photo-transistor devices.

By way of example the present invention will now be described with reference to the accompanying drawings in which;

Figure 1 is a block schematic diagram of a solid state electric switching arrangement according to the present invention;

Figure 2 is a circuit diagram of one specific embodiment of solid state electric switching arrangement illustrated schematically in Figure 1;

Figure 3 is a waveform diagram depicting the zero voltage switch on and random voltage switch off points of the switching arrangement according to the invention; and,

· Figure 4 shows various waveform diagrams appertaining to the switching arrangement of Figure 2.

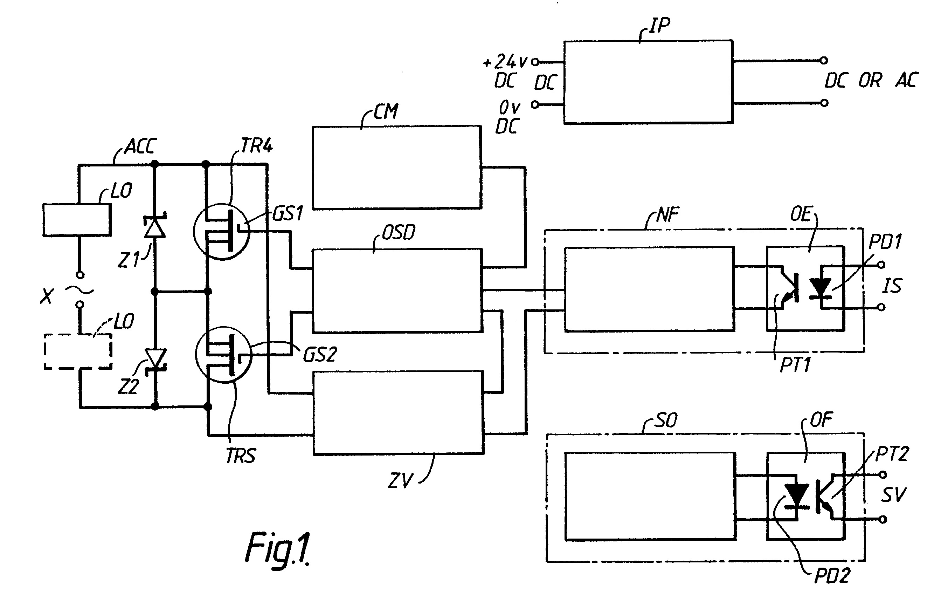

Referring to Figure 1 of the drawings, an AC circuit to be switched and protected against overcurrents by the electric switching arrangement illustrated is indicated at ACC and includes a load LO and an AC supply X of any suitable frequency (e.g. 400Hz). The load LO could alternatively be located in the position indicated by the dotted outline. The switching arrangement illustrated comprises a pair of field effect transistors (MOSFETS) TR4 and TR5 having connected across them respective Zener diodes Z1 and Z2 which protect the transistors against transient voltage surges. The gate source junction GS1 and GS2 of the transistors TR4 and TR5 are connected to the outputs of an output switch drive circuit OSD which controls the conducting/non-conducting condition of the transistors TR4 and TR5 in dependence upon inputs from a current monitoring circuit CM which monitors the peak current levels in the AC circuit and the load LO during normal operation of the circuit and from a switch on/switch off circuit NF. The circuit NF also provides an input to a zero voltage level switch on circuit ZV which in turn provides another input to the output switch drive circuit. A status output circuit SO is provided to give an indication of the condition of the switching transistors TR4 and TR5.

To initiate switching on of the AC circuit ACC for the energisation of the load LO the AC supply X and an isolated DC supply IP for the switching arrangement are switched on. A DC input signal IS is applied to an optically isolating device OE comprising a photo-diode PD1 and a photo-transistor PT1. The output from the transistor PT1 causes the circuit NF to condition the output switch drive circuit ready for conduction of the transistors TR4 and TR5. At the same time it conditions the zero voltage level switch on circuit ZV which effectively determines when the AC supply voltage is at zero voltage level and signals this zero voltage level condition to the output switch drive circuit OSD which accordingly initiates conduction of the switching transistors TR4 and TR5 and operation of the AC circuit by closure of the electric switching arrangement. In this closed condition of the switching arrangement the status circuit SO will produce an electrical output SV from an optically isolating device OF comprising a photo-diode PD2 and a photo-transistor PT2. During operation of the AC circuit the peak level of the current flowing in the circuit and load is monitored by the current monitor CM. If the peak current level exceeds a predetermined permitted or overcurrent level the current monitor CM will provide an output signal which causes the output switch drive circuit OSD to undergo an instantaneous change of state to render the switching transistors TR4 and TR5 non-conducting in order to open the AC circuit ACC.

The control input signal to the device PD1 may be removed and re-applied to produce re-operation of the AC circuit.

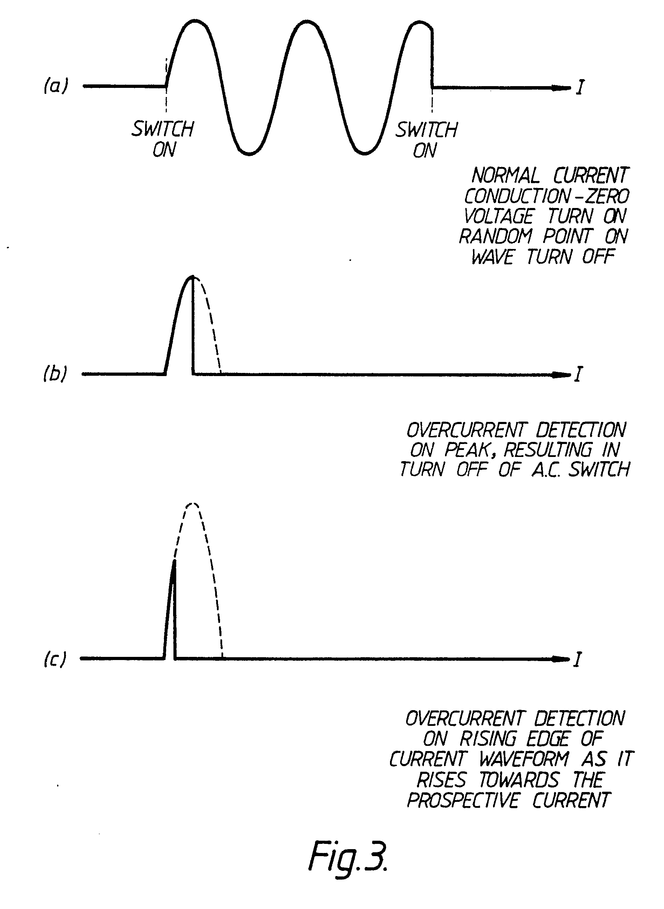

Referring to Figure 3 of the drawings the waveform diagram depicts the zero voltage point switch on of the AC current in the load circuit at (a) and the random voltage point switch off facility provided by the switching arrangement at (b) where the current level is just high enough to cause turn off at the peak value and (c) where the prospective current is much higher than the overcurrent setting so that turn off occurs on the rising edge of the AC current.

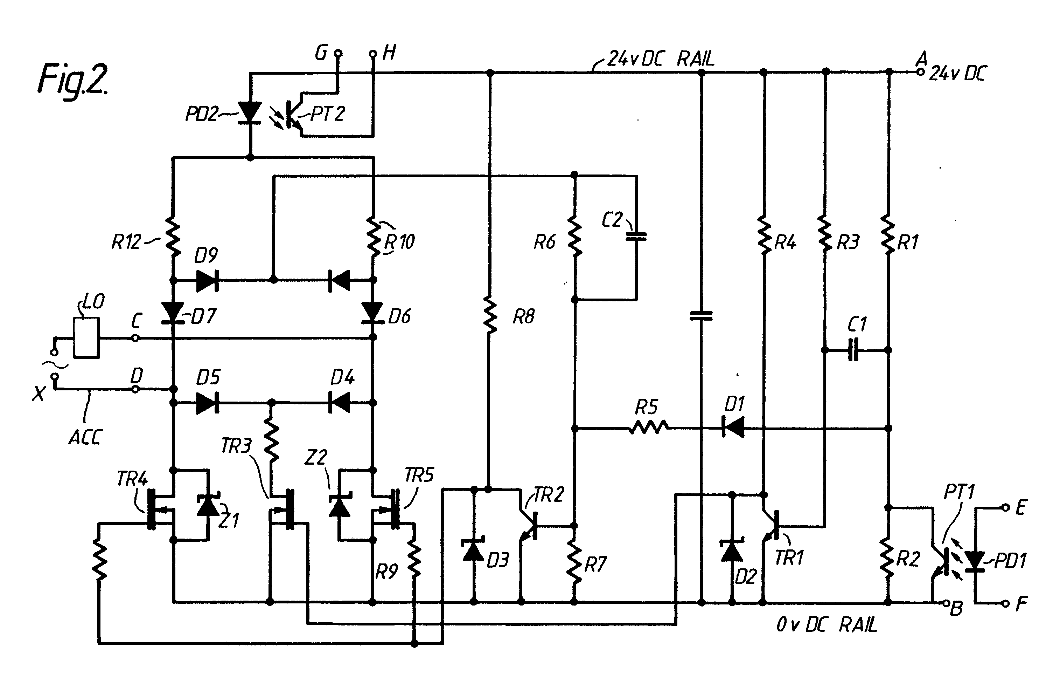

Turning now to Figure 2 of the drawings which shows one specific embodiment of the invention depicted schematically in Figure 1, the solid state switching arrangement is powered from an isolated power supply (not shown) which provides an output of 24 Volts DC. This power supply is connected to terminals A and B of the switching arrangement and may comprise a transformer derived DC supply or isolated DC to DC converter.

The AC circuit ACC including the load LO to be switched and protected by the switching arrangement against overcurrents and the AC supply are connected to the terminals C and D of the arrangement. The switch on/switch off circuit NF of Figure 1 is represented in Figure 2 by a transistor TR1, resistors R1, R2, R3 and R4 and a capacitor C1 whilst the output switch drive circuit OSD of Figure 1 is represented by a transistor TR2, Zener diode D3 and a resistor R8.

The zero voltage level switch on circuit ZV is defined by a field effect transistor TR3 and resistors R10, R11 and R12 and further resistors R6 and R7, diodes D6, D7, D8 and D9 and a capacitor $C_2$.

The current monitor circuit CM of Figure 1 is provided by the diodes D8 and D9 and resistors R6 and R7 and the status circuit SO is formed by the photo-diode PD2 and photo-transistor PT2.

In order to initiate the operation of switching arrangement to supply the load LO with AC current a DC control input signal IS will be applied across the terminals E and F to energise the photo-diode PD1 for the conduction of photo-transistor PTI. Prior to the application of this control input signal IS the switching arrangement will be in the off condition as will be indicated by the absence of status signal SV across the terminals G and H of the switching arrangement.

In the absence of the control input signal IS across the terminals E and F and no current flow in the photo-diode PD1 the photo-transistor PTI will be non-conducting and the voltage at the junction of the resistors R1 and R2 will be about 5 Volts DC set by the resistor R1 in series with resistor R2 and diode D1, resistor R5 and the base/emitter path of transistor TR2 in parallel. The current flowing into the base of transistor TR2 renders it conducting so that its collector will be at a nominal 0 Volts. This 0 Volts collector voltage level will appear across the gate-sources of the two field effect transistors TR4 and TR5 which will accordingly be maintained in a non-conducting condition thereby preventing the supply of AC current to the load LO from the AC supply X.

The voltage applied to the base of transistor TR1 through the resistor R3 causes the transistor to conduct so that the collector of the transistor is at a nominal 0 Volts and the base at 0.7 Volts. This 0 Volts level of the collector is applied across the gate-source of the field effect transistor (MOSFET) TR3 so that the transistor is non-conducting and therefore prevents current flow through the resistor R11.

Since, as previously mentioned, the voltage at the junction of the resistors R1 and R2 will be 5 Volts and the base voltage of the transistor TR1 is 0.7 Volts the capacitor C1 will therefore be charged to 4.3 Volts.

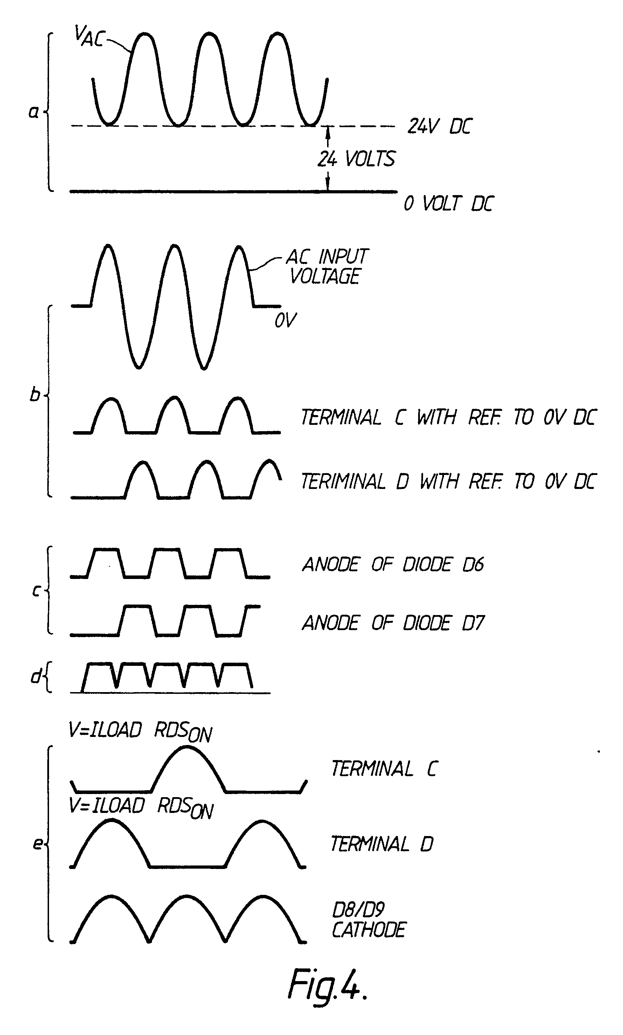

The switching transistors TR4 and TR5 and the transistor TR3 are all in the non-conducting condition with the result that the full AC supply voltage is applied across the terminals C and D. The voltage at the terminal C with reference to the 0 Volt DC rail is defined by an AC voltage waveform sitting on the 24 Volts DC rail as depicted at (a) in Figure 4. The waveform of the voltage at terminal D with reference to the 0 Volt DC rail will be similar to that at the terminal C but having a 180° phase shift relative thereto.

The 24 Volt DC is applied to the anodes of the diodes D6 and D7 and the higher AC voltage at the terminals C and D is blocked by these diodes. The 24 Volt DC level minus a small forward biasing voltage drop occurring across the diodes D8 and D9 is applied to a divider arrangement comprising the resistors R6 and R7. The resultant current flowing in the resistor R6 produces a voltage at the junction between resistors R6 and R7 which is potentially greater than a 0.7 Volts base-emitter voltage necessary to render the transistor TR2 conducting. Consequently, the current flowing into the base of the transistor TR2 re-inforces that supplied via resistor R5 and maintains the transistor TR2 in the conducting state in order to keep the transistors TR4 and TR5 in the non-conducting state. Capacitor C2 across the resistor R6 is charged to 24 Volts minus 0.7 Volts (i.e. base-emitter voltage of TR2) equals 23.3 Volts.

In the non-conducting condition of the transistors TR4 and TR5 the current flow through the photo-diode PD2 of the status circuit SO is only that current flowing through the resistor R6 thereby restricting the current flow through the terminals G and H to a low level indicating the off state of the electric switching arrangement.

To initiate operation of the AC switching arrangement allowing AC current to flow through the load L0 a DC control input voltage is applied across the terminals E and F to energise photo-diode PD1 thereby rendering the photo-transistor PT1 conducting. The collector voltage of photo-transistor PT1 therefore drops rapidly to a nominal 0 Volts thereby short-circuiting the resistor R2 and so reducing the divider voltage of the junction of the resistors R1 and R2 to 0 Volts. This terminates the current flow through the diode D1 and the resistor R5 into the base of the transistor TR2. However, transistor TR2 still has base current flowing from resistor R6 and so remains in a conducting state and diode D1 becomes reversed biased. At the instant at which resistor R2 is short-circuited by the conduction of the photo-transistor PT1 the capacitor $C_1$ is charged to a potential of 4.3 Volts. This capacitor charge cannot be removed instantaneously so when the junction of resistors R1 and R2 is reduced to 0 Volts by the conduction of the photo-transistor PT1 the base of the transistor TR1 is accordingly forced down to a prospective minus 4.3 Volts. This reverse biases the base-emitter junction of the transistor TR1 and renders it non-conducting. The collector voltage of the transistor TR1 rises due to being pulled up by the resistor R4 until the voltage of the Zener diode D2 (typically 12 Volts) is reached, whereupon the collector remains at this voltage value. This collector voltage appears across the gate source terminals of the field effect transistor TR3 which accordingly conducts.

The capacitor C1 charges via resistor R3 until its voltage rises to 0.7 Volts whereupon transistor TR1 again conducts and its collector voltage falls to a nominal 0 Volts. This causes transistor TR3 to be rendered non-conducting once again.

The time period for which the collector of the transistor TR1 remains at the limiting voltage of the Zener diode D2 may be set to 1.3 milliseconds for AC circuits operating at 400Hz. This is equivalent to 5% longer than the half period of the switched AC current waveform. This setting is achieved by variation of the value of the capacitor C1 and/or the resistor R3.

The transistor TR3 is conducting for this time period just referred to and the DC current path exists from the 24 Volt rail to the 0 Volt rail through the photo-diode PD2, resistor R12, diode D7, and transistor TR4 and the photo-diode PD2, resistor R10, diode D6 and transistor TR5. A small amount of AC current will now flow from the terminal C to the terminal D via the diode D4, resistor R11, transistor TR3 and the inverse Zener diode Z1 across transistor TR4 when the terminal C is more positive than the terminal D and from the terminal D to terminal C through the diode D5, resistor R11, and the transistor TR3, and the inverse Zener diode Z2 across the transistor TR5 when the terminal D is more positive than the terminal C. This current flow results in the AC waveform which now appears across terminal C and D being referenced to the 0 Volt DC level rather than the 24 Volt DC level as shown in Figure 4 (a). The voltage at the terminal C with respect to the 0 Volts shows the positive half of the voltage waveform followed by a 0 Volt level during the negative portion of the AC waveform. The voltage at the terminal D shows a similar waveform 180° out of phase with that at the terminal C. The waveforms of these voltages are depicted at (b) in Figure 4. Also considering the voltage at the anode of diode D7 when the terminal D is more positive than the terminal C the anode voltage rises as it is pulled up by photo-diode PD2 and resistor R12 and follows the rate of rise of the AC voltage waveform. Once this waveform exceeds the 24 Volts DC level the diode D7 becomes reverse biased and the AC waveform rises to the full AC peak. During this period the anode of the diode D7 remains at the 24 Volts DC level. As the AC voltage waveform drops from its positive peak value it drops below 24 Volts and diode D7 become forward biased and its anode is pulled towards 0 Volts. During the negative half cycle the anode of the diode D7 remains at 0 Volts only rising again when the terminal D becomes more positive than terminal C. As can be seen from the waveforms at (c) in Figure 4 a similar situation occurs at the anode of the diode D6 but with a 180° phase shift. The cathodes of diodes D8 and D9 combine the waveforms at the anodes of diodes D6 and D7 as shown at (c) thereby producing the waveform as shown at (d) in Figure 4 which exhibits negative-going peaks when the AC voltage waveform is about the zero voltage point. This waveform at (d) in Figure 4 is applied to the base of transistor TR2 via the resistor divider chain comprising resistors R6, R7 and the AC by-pass capacitor C2. The negative peaks reduce the base voltage to below the 0.7 Volt level necessary to maintain the transistor TR2 in a conducting state and the transistor TR2 accordingly ceases to conduct. This causes the collector voltage of the transistor TR2 to rise to the limiting voltage of the Zener diode D3 (typically 12 volts). This limiting voltage appears across the gate-source junctions of the switching transistors TR4 and TR5 and turns them on at the zero voltage point. This will prevent the switching arrangement causing radio frequency interference. It may here be mentioned that the resistors R9 and R13 are low ohmic value resistors and will thereby reduce the amplitude and duration of spurious oscillations occurring between the gate-source junctions of the switching transistors TR4 and TR5.

The drain source voltages of the two switching transistors TR4 and TR5 drop rapidly and effectively short-circuit current paths through the diodes D4 and D5, resistor R11 and transistor TR3. The voltage drop between terminals C and D drops substantially and AC current flows through the switching transistors TR4 and TR5. When these transistors conduct the voltages at the cathodes of the diodes D6 and D7 fall to a value dependent on the current flow through the transistors when conducting which is much less than the 24 Volt level when the transistors are in a non-conducting state. This voltage drop is reflected at the common cathodes of the diodes D8 and D9 and thus at the base of transistor TR2 which forces the transistor TR2 further away from conduction.

The AC switching arrangement of the invention is now in the on condition. Note that transistor TR3 conducts only long enough for one voltage zero to be detected. This minimises the number of turn ons into a short-circuit. Current flow through the photo-diode PD2, resistor R12, diode D7 and the switching transistor TR4 and photo-diode PD2, resistor R10 diode D6 and switching transistor TR5 produces a full current flow through the photo-transistor PT2 thus giving full current flow between terminals G and H indicating the on state of the switching arrangement. Referring to waveforms at (e) (Figure 4), with the AC current flowing through the switching transistors TR4 and TR5 the voltage drop across each transistor is $V = I_{Load} RDS_{ON}$, where RDS = resistance drain-to-source in "on" state of field effect transistors. This voltage drop is reflected in the voltages at the anodes of the diodes D6 and D7 and at the cathodes of the diodes D8 and D9, as shown. This waveform appears on the base of the transistor TR2. As long as the peak of the waveform is less than the 0.7 Volt base-emitter voltage required to render the transistor TR2 conducting the transistor TR2 remains non-conducting and AC current flows. However, if the AC current increases such that the voltage waveform on the base of the transistor TR2 exceeds the 0.7 volt threshold value then the transistor TR2 moves into conduction. The collector voltage of the transistor TR4 falls and so reduces the gate source voltage of the switching transistors TR4 and TR5 thereby forcing them out of conduction. This in turn increases the voltage appearing across them and so increases the base-emitter voltage of the transistor TR2 ensuring a rapid turn off of the switching arrangement.

In this way the AC current in the AC circuit is turned off rapidly at random points in the AC waveform when an overcurrent condition occurs. Adjustment of the overcurrent level may be made by adjustment of the resistor R7 and by appropriate selection of the switching transistors TR4 and TR5 for suitable $RDS_{ON}$ values.

The switching arrangement may only be re-closed by removing the control input signal IS to the terminals E and F and then re-applying the control input signal to cause the switching arrangement to repeat the switch on procedure described.

If during normal operation of the AC circuit it is required to switch off the circuit, the control input signal IS is removed from between the terminals E and F so that the divider point of the resistors R1 and R2 is released by photo-transistor PT1 since its output now becomes high impedance and its voltage rises to the 5 Volt level. This allows current to flow through the diode D1 and the resistor R5 into the base of the transistor TR2 so causing the transistor TR2 to conduct so that its collector voltage falls thereby removing the gate source voltage from the switching transistors TR4 and TR5 to render them non-conducting and thereby blocking the AC current flow therethrough and the load current in the AC circuit.

## Claims

1. A solid state electric switching arrangement for switching and protecting an AC circuit against predetermined levels of overcurrent comprising a pair of switching transistors which are controlled by an output drive circuit to be conducting during normal operation of the AC circuit, a current level monitoring circuit for monitoring the peak current levels in the AC circuit during operation thereof and effective for producing an instantaneous change of state of the output drive circuit to render the pair of switching transistors non-conducting when the monitored peak current level exceeds a predetermined overcurrent level and a zero voltage switch on circuit which conditions the pair of switching transistors prior to switch on of the AC circuit so that the switching transistors are rendered conducting at the instant when the AC supply voltage for the AC circuit is at zero voltage level.

2. A solid state electric switching arrangement as claimed in claim 1, comprising a status circuit which detects and provides an indication of the conducting or non-conducting condition of the switching transistors.

3. A solid state electric switching arrangement as claimed in claim 2, in which the status circuit comprises an optical coupling arrangement between a photo-diode and photo-transistor to provide electrical isolation between the input and output sides of the status circuit.

4. A solid state electric switching arrangement as claimed in any preceding claim, comprising a switch on/switch off circuit having outputs therefrom connected to the output switch drive circuit and the zero voltage switch on circuit and having a control input signal applied to the input thereof when operation of the AC circuit is required.

5. A solid state electric switching arrangement as claimed in claim 4, in which the switch on/switch off circuit comprises an optical coupling arrangement between a photo-diode and photo-transistor to provide electrical isolation between the input and output sides of the switch on/switch off circuit.

6. A solid state electric switching arrangement as claimed in claim 4 or claim 5, in which the control input signal applied to the switch on/switch off circuit needs to be removed and then re-applied in order to restore normal operation of the AC circuit following disconnection of the AC circuit in response to the detection of an overcurrent condition in the circuit.

7. A solid state electric switching arrangement as claimed in any preceding claim in which the pair of switching transistors are field effect transistors (e.g. MOSFETS).

8. A solid state electric switching arrangement as claimed in any preceding claim in which the switching arrangement is powered from a low voltage DC isolated power supply.

Fig.1

IP

+24v
DC    DC

0v
DC

DC OR AC

CM

OSD

ZV

ACC    TR4

LO

Z1          GS1

X

LO

Z2          GS2

TRS

NF          OE

PD1

IS

PT1

SO          OF

PT2

SV

PD2

EP 0 392 733 A2

# Fig.2.

24v DC RAIL

24v DC

EP 0 392 733 A2

0v DC RAIL

(a)

SWITCH
ON

SWITCH
ON

NORMAL CURRENT
CONDUCTION - ZERO
VOLTAGE TURN ON
RANDOM POINT ON
WAVE TURN OFF

(b)

OVERCURRENT DETECTION
ON PEAK, RESULTING IN
TURN OFF OF A.C. SWITCH

(c)

OVERCURRENT DETECTION
ON RISING EDGE OF
CURRENT WAVEFORM AS IT
RISES TOWARDS THE
PROSPECTIVE CURRENT

Fig.3.

a {
$V_{AC}$

24V DC

24 VOLTS

0 VOLT DC

b {
AC INPUT
VOLTAGE

0V

TERMINAL C WITH REF. TO 0V DC

TERIMINAL D WITH REF. TO 0V DC

c {
ANODE OF DIODE D6

ANODE OF DIODE D7

d {

e {
$V = ILOAD\ RDS_{ON}$

TERMINAL C

$V = ILOAD\ RDS_{ON}$

TERMINAL D

D8/D9
CATHODE

Fig.4.